# EUROPEAN PATENT APPLICATION

(11) **EP 4 729 352 A1**
(43) Date of publication of application: **22.04.2026**
(21) Application number: 25209198.8
(22) Date of filing: 16.10.2025
(51) Int. Cl.: B60N 2/02, B60N 2/16, B60N 2/18

(54) **ZERO GRAVITY SEAT WITH HEIGHT-ADJUSTABLE CUSHION**

(30) Priority: 17.10.2024 CN 202411450344
(71) Applicant: Adient (Chongqing) Automotive Components Co., Ltd., Liangjiang New Area, Chongqing 401122 (CN)
(72) Inventor: ZHANG, Dong, Liangjiang New Area, Chongqing, 401122 (CN); ZHANG, Ming, Liangjiang New Area, Chongqing, 401122 (CN); CHEN, Zhiyong, Liangjiang New Area, Chongqing, 401122 (CN); LIN, Bijun, Liangjiang New Area, Chongqing, 401122 (CN)
(74) Representative: Liedtke & Partner Patentanwälte

(57) **Abstract**

The invention relates to a zero gravity seat with height-adjustable cushion, comprising a base (1), with a frame (2) being provided above the base (1), a seat backrest (3) being rotatably installed at a rear end of the frame (2), a lower connecting plate (4) being rotatably connected to a front end of the base (1), and an upper connecting plate (5) being rotatably connected to a front end of the frame (2), the lower connecting plate (4) and the upper connecting plate (5) being hinge-connected to each other, characterized in that a rotary component (6) is provided between a rear part of the base (1) and a rear part of the frame (2), the rotary component (6) having a first fulcrum rotatably connected to the rear end of the frame (2) and a second fulcrum rotatably connected to the base (1);
a zero gravity drive mechanism (10) and a height adjustment drive mechanism (7) are installed on the base (1), the zero gravity drive mechanism (10) being configured to drive the lower connecting plate (4) to rotate relative to the base (1), and the height adjustment drive mechanism (7) being configured to drive the rotary component (6) to rotate about the second fulcrum relative to the base (1).

## Description

### Technical field

The present invention relates to the technical field of zero gravity seats, in particular to a zero gravity seat with a height-adjustable cushion.

### Background of the invention

Zero gravity seats are a product that allows people to travel in a motor vehicle comfortably. By lifting up a front end of a frame, tilting a backrest of the seat backwards, and tilting a leg support forwards, they put the passenger in a near-reclining state, and thus mitigate the feeling of tiredness associated with travelling for long periods.

In the prior art, a rear end of a frame of a zero gravity seat is rotatably installed on a seat base, a connecting rod mechanism is provided between a front end of the frame and a front end of the base, and the front end of the frame can be lifted by using an electric angle adjuster to drive the connecting rod mechanism to move. With this mechanism, the connecting rod mechanism and the electric angle adjuster take up a considerable amount of assembly space between the frame and the base, and consequently, it is not possible to add another mechanism to the frame to perform a frame height adjustment function, so the overall functionality of the seat is limited.

### Summary of the invention

In view of the above, the present invention provides a zero gravity seat with a height-adjustable cushion, with the aim of ensuring that the seat has both zero gravity mode adjustment (in which a front end of a frame is lifted) and cushion height adjustment functions.

To achieve this objective, the technical solution of the present invention is as follows:
A zero gravity seat with height-adjustable cushion, comprising a base, with a frame being provided above the base, a seat backrest being rotatably installed at a rear end of the frame, a lower connecting plate being rotatably connected to a front end of the base, and an upper connecting plate being rotatably connected to a front end of the frame, the lower connecting plate and the upper connecting plate being hinge-connected to each other, characterized in that a rotary component is provided between a rear part of the base and a rear part of the frame, the rotary component having a first fulcrum rotatably connected to the rear end of the frame and a second fulcrum rotatably connected to the base; a zero gravity drive mechanism and a height adjustment drive mechanism are installed on the base, the zero gravity drive mechanism being configured to drive the lower connecting plate to rotate relative to the base, and the height adjustment drive mechanism being configured to drive the rotary component to rotate about the second fulcrum relative to the base.

When the structure described above is employed, by having the zero gravity drive mechanism drive the lower connecting plate to rotate, elevation angle adjustment of the frame can be achieved, and by having the height adjustment drive mechanism drive the rotary component to rotate relative to the base, height adjustment of the frame can be achieved, such that the seat has both a zero gravity mode and a cushion height adjustment function.

Preferably, the rotary component comprises a rear cross-tube and two rotary connecting plates fixed to two ends of the rear cross-tube, two ends of the rear cross-tube being rotatably fitted into a rear part of the frame, and middle parts of the two rotary connecting plates being rotatably installed at two sides of the interior of the base respectively; and two said height adjustment drive mechanisms are provided, respectively configured to drive the two rotary connecting plates to rotate. When the structure described above is employed, the two symmetrically arranged rotary connecting plates result in more stable installation of the rotary component, and the two height adjustment drive mechanisms arranged at the front end ensure sufficient driving force, thus ensuring that the cushion lifts upwards stably.

Preferably, an arc-shaped segment adapted to a profile of the rear cross-tube, and a supporting part extending rearwards from a lower end of the arc-shaped segment, are provided at a rear end of the rotary connecting plate, the arc-shaped segment and the supporting part both being connected to the rear cross-tube by welding. When the structure described above is employed, it can be ensured that the structure of the entire rotary component is sturdier.

Preferably, the height adjustment drive mechanism comprises an electric motor and a lead screw driven to rotate by the electric motor, a base of the electric motor being rotatably arranged in a middle position of the base, a slider being fitted by screw-thread to the lead screw, and an end of the slider remote from the electric motor being rotatably connected to the rotary connecting plate. When the structure described above is employed, by having the lead screw drive the slider to move linearly, rotation of the rotary component about the second fulcrum relative to the base can be achieved.

Preferably, a side part of the base is provided with a supporting guide hole, and an outwardly protruding guide rod is provided on the slider, the guide rod being slidably supported in the supporting guide hole. When the structure described above is employed, the stability of support at this position can be increased, thus increasing the seat strength.

Preferably, the supporting guide hole is an arc-shaped hole, and an upwardly recessed accommodating slot is provided at an upper side of the arc-shaped hole. When the structure described above is employed, it is possible to adapt to the arc-shaped path of movement of the slider, and the accommodating slot can prevent bending damage to the lead screw in the event of a collision when the seat of the motor vehicle is in a height-adjusted state.

Preferably, a connecting support is provided on the slider, the guide rod being arranged on the connecting support, and an extension part extending towards the electric motor is provided on the rotary connecting plate, the connecting support being rotatably connected to the extension part, and installed at a front end of the second fulcrum. When the structure described above is employed, the total length of the lead screw can be reduced while ensuring that the rotary component has sufficient rotational travel.

Preferably, the lower connecting plate and the upper connecting plate are provided in two sets, the two sets of lower connecting plates and upper connecting plates being arranged at two sides of the base with left-right symmetry; the two lower connecting plates are connected to each other by a first synchronous rod, the two upper connecting plates are connected to each other by a second synchronous rod, and the zero gravity drive mechanism is an electric angle adjuster that drives the lower connecting plates to rotate. When the structure described above is employed, the front end of the frame can be stably connected to the base, so as to achieve stable lifting of the front end of the frame.

Preferably, first limiting parts are folded upwards at two sides of the front end of the base, and when the seat is in a folded state, the lower connecting plates are able to abut the first limiting parts; second limiting parts extend outwards at two sides of the front end of the base, limiting protrusions are provided on a side face of the lower connecting plates close to the frame, and when the seat is in zero gravity mode, side parts of the limiting protrusions abut the second limiting parts. When the structure described above is employed, limiting support of the seat is possible in the folded state and also in zero gravity mode, ensuring structural stability of the entire seat.

Preferably, a seatbelt retractor is provided at a shoulder position of the seat backrest. When the structure described above is employed, it can be ensured that in zero gravity mode, a seatbelt restrains the passenger at all times, thus ensuring safety of travel for the passenger.

Compared with the prior art, the beneficial effects of the present invention are as follows:
1. When the zero gravity seat with height-adjustable cushion provided in the present invention is employed, by having the zero gravity drive mechanism drive the lower connecting plate to rotate, elevation angle adjustment of the frame can be achieved, and by having the height adjustment drive mechanism drive the rotary component to rotate relative to the base, height adjustment of the frame can be achieved, such that the seat has both zero gravity mode adjustment and cushion height adjustment functions.
2. The rotary component is driven by two symmetrically arranged height adjustment drive mechanisms, so sufficient driving force can be provided to cause the whole frame to lift upwards while ensuring overall structural stability.
3. As a result of having the seatbelt retractor arranged at the shoulder position of the seat backrest, the seatbelt can restrain the passenger at all times when the motor vehicle seat is in zero gravity mode, thus ensuring safety of travel for the passenger.

### Brief description of the drawings

Fig. 1 is a three-dimensional structural schematic drawing of a seat in a folded state.
Fig. 2 is a three-dimensional structural schematic drawing of a seat in zero gravity mode.
Fig. 3 is a three-dimensional structural schematic drawing of a cushion in a height-adjusted state.
Fig. 4 is a three-dimensional structural schematic drawing of a seat in zero gravity mode and a height-adjusted state.
Fig. 5 is a structural schematic drawing showing the installation relationship of a rotary component 6 and a height adjustment drive mechanism 7.
Fig. 6 is an exploded schematic drawing of the rotary component 6.
Fig. 7 is a partial enlarged drawing of a seat in zero gravity mode.
Fig. 8 is a partial enlarged drawing of a seat in the folded state.
Fig. 9 is a structural schematic drawing showing a supporting guide hole 1a.
Fig. 10 is a structural schematic drawing showing the installation relationship of a frame 2 and a seat backrest 3.
Fig. 11 is a structural schematic drawing of slide rails 12.
Corresponding parts are marked with the same reference symbols in all figures.

### Detailed description of embodiments

The present invention is explained further below in conjunction with embodiments and the drawings.

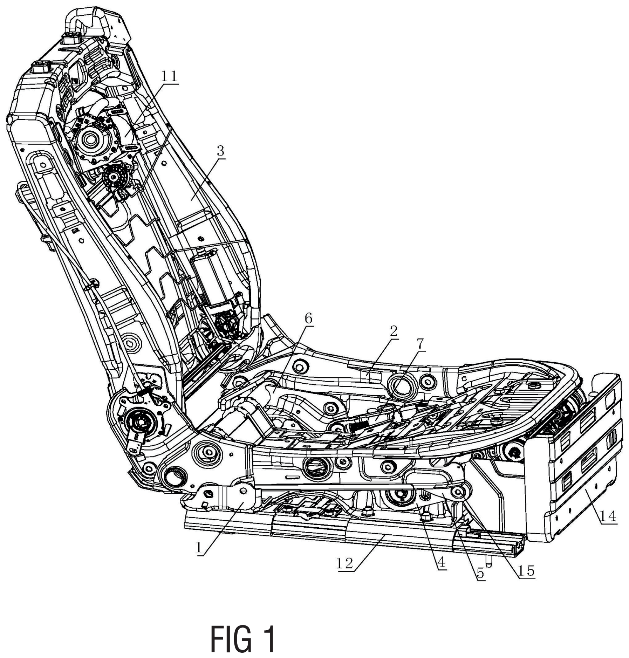

As shown in Figs 1 - 4, a zero gravity seat with a height-adjustable cushion comprises a base 1; a frame 2 is installed above the base 1, a seat backrest 3 is rotatably installed at a rear end of the frame 2, a lower connecting plate 4 is rotatably installed at a front end of the base 1, an upper connecting plate 5 is rotatably installed at a front end of the frame 2 by means of a pin 15, and the lower connecting plate 4 and the upper connecting plate 5 are rotatably connected together, likewise by means of a pin 15. In this embodiment, a rotary component 6 is also installed between a rear end of the base 1 and the rear end of the frame 2, the rotary component 6 having a first fulcrum rotatably connected to the frame 2 and a second fulcrum rotatably connected to the base 1. A zero gravity drive mechanism 10 and a height adjustment drive mechanism 7 are also installed on the base 1, the zero gravity drive mechanism 10 being configured to drive the lower connecting plate 4 to rotate relative to the base 1, and the height adjustment drive mechanism 7 being configured to drive the rotary component 6 to rotate relative to the base 1 about the second fulcrum. In this embodiment, either the zero gravity drive mechanism 10 or the height adjustment drive mechanism 7 operates, i.e. when the zero gravity drive mechanism 10 is operating, the height adjustment drive mechanism 7 is stopped, and when the height adjustment drive mechanism 7 is operating, the zero gravity drive mechanism 10 is stopped.

With this design, the seat has both zero gravity mode adjustment (in which the front end of the frame is lifted) and cushion height adjustment functions. The height adjustment drive mechanism 7 stops operating, and by having the zero gravity drive mechanism 10 drive the lower connecting plate 4 to rotate, the upper connecting plate 5 can be driven to rotate, and the frame 2 can be caused to rotate about the first fulcrum as the upper connecting plate 5 rotates, thus realizing elevation angle adjustment of the frame 2. The zero gravity drive mechanism 10 stops operating, and by having the height adjustment drive mechanism 7 drive the rotary component 6 to rotate relative to the base 1, the rear end of the frame 2 can be driven to lift upwards, and the upper connecting plate 5 can be driven to rotate, with an upper end of the lower connecting plate 4 as a fulcrum, as the frame 2 lifts, so that the front end of the frame 2 lifts, thus realizing height adjustment of the frame.

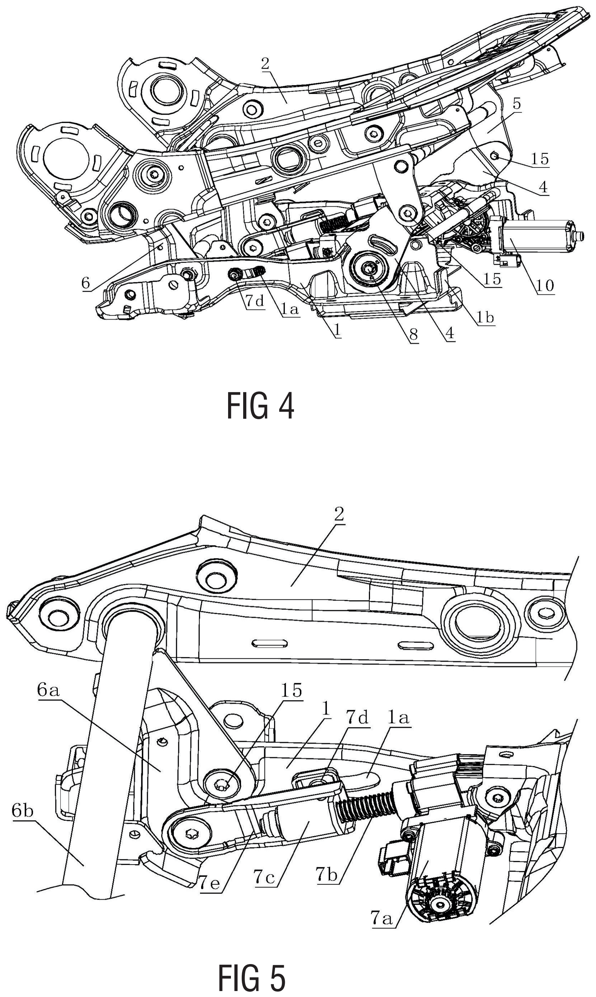

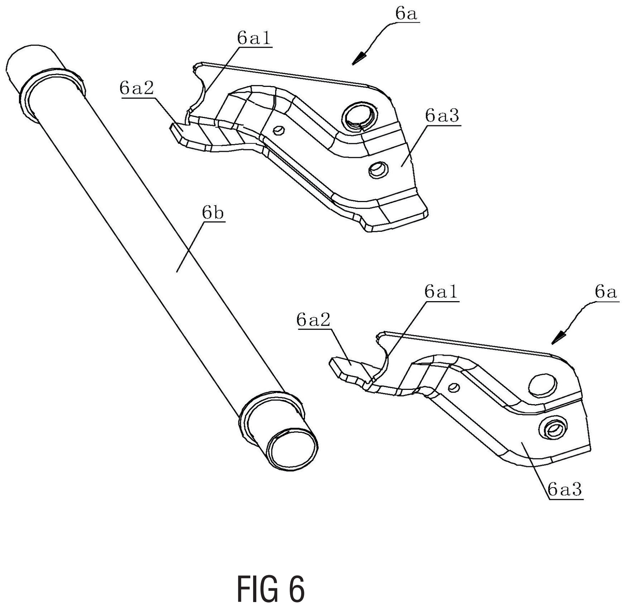

As shown in Figs 5 and 6, the rotary component 6 comprises rotary connecting plates 6a and a rear cross-tube 6b, wherein the rotary connecting plates 6a are symmetrically arranged at two sides of the rear cross-tube 6b, and the two rotary connecting plates 6a are both rotatably installed at the rear end of the base 1; the height adjustment drive mechanism 7 is installed at a front end of each rotary connecting plate 6a, and two ends of the rear cross-tube 6b are both rotatably installed at the rear end of the frame 2. The symmetrically arranged rotary connecting plates 6a ensure the stability of the overall structure of the rotary component 6, and the fact that one height adjustment drive mechanism 7 is installed at the front end of each rotary connecting plate 6a means that sufficient driving force is provided for lifting up the frame 2, thereby ensuring that the entire cushion is lifted up stably.

Further, as shown in Fig. 6, an arc-shaped segment 6a1 adapted to a profile of the rear cross-tube 6b, and a supporting part 6a2 extending rearwards from a lower end of the arc-shaped segment 6a1, are formed at a rear end of the rotary connecting plate 6a. The supporting part 6a2 is formed directly below the rear cross-tube 6b, and both the supporting part 6a2 and the arc-shaped segment 6a1 are connected to the rear cross-tube 6b by welding. This design can further ensure the stability of the overall structure of the rotary component 6, thereby ensuring stable installation of the base 1 and the rear end of the frame 2.

As shown in Fig. 5, in this embodiment, the rotary connecting plate 6a of the rotary component 6 is rotatably installed at an inner side of the base by means of a pin 15; here, a centre line of the pin 15 is the second fulcrum mentioned above. A centre line of the rear cross-tube 6b is the first fulcrum mentioned above.

As shown in Fig. 5, the height adjustment drive mechanism 7 comprises an electric motor 7a, and a lead screw 7b is fitted round an output end of the electric motor 7a. In this embodiment, the lead screw 7b is arranged in the front-rear direction of the seat, a slider 7c is fitted by screw-thread to the lead screw 7b, a connecting support 7e is fixedly installed on an outer end of the slider 7c, an end of the connecting support 7e remote from the electric motor 7a is rotatably connected to the rotary connecting plate 6a, an extension part 6a3 extending towards the electric motor 7a is provided on the rotary connecting plate 6a, and the connecting support 7e is rotatably connected to the extension part 6a3, and installed at a front end of the second fulcrum. With this design, when the electric motor 7a drives the slider 7c to move in the axial direction of the lead screw 7b, the rotary connecting plate 6a can be forced to rotate about the second fulcrum relative to the base 1; and the design of the connecting support 7e and the extension part 6a1 enables the total length of the lead screw 7b to be reduced while ensuring that the rotary component 6 has sufficient rotational travel.

In addition, a supporting guide hole 1a is formed at both a left side and a right side of the base 1, and a guide rod 7d is formed on each of the two connecting supports 7e, the guide rods 7d both being arranged inside the supporting guide holes 1a. With this design, during operation of the height adjustment drive mechanism 7, the stability of support at these positions can be increased, thereby increasing the overall strength of the seat.

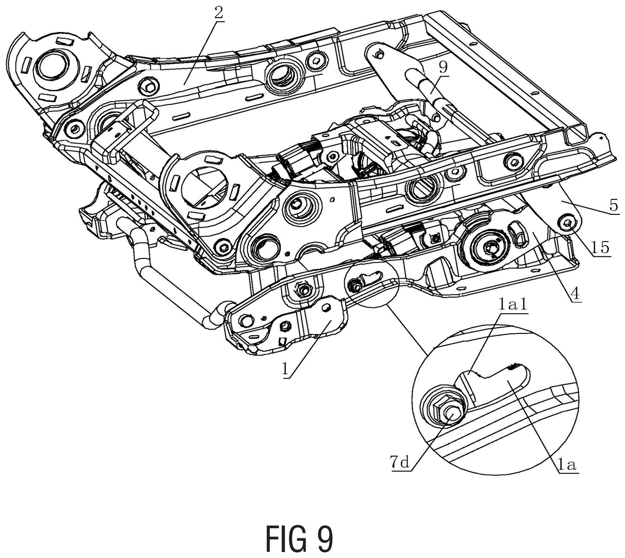

Further, in this embodiment, the electric motor 7a is rotatably arranged in a middle position of the base 1, and the supporting guide hole 1a is configured to have an arc-shaped structure. This design can adapt to the arc-shaped path of movement of the slider 7c, avoiding movement interference between the guide rod 7d and the supporting guide hole 1a. In addition, as shown in Fig. 9, an upwardly recessed accommodating hole 1a1 is formed at an upper side of the supporting guide hole 1a; if a traffic accident involving a collision occurs when the frame 2 is adjusted to the highest position, an impact force will be applied to the lead screw 7b, causing the lead screw 7b to suffer bending deformation. Due to the design featuring the accommodating hole 1a1 at the upper side, the impact force acting on the lead screw 7b can drive the guide rod 7d at an outer side to slide into the accommodating hole 1a1; this indirectly provides stable support for the lead screw 7b, thus avoiding impact deformation or bending of the lead screw 7b during a collision.

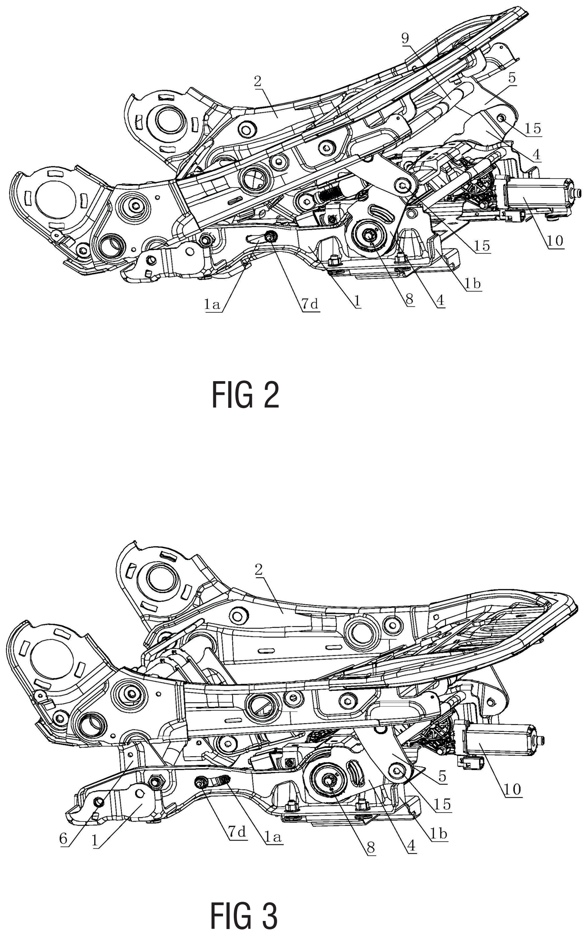

As shown in Figs 2 - 3, the lower connecting plate 4 and the upper connecting plate 5 are provided in two sets, the two sets of lower connecting plates 4 and upper connecting plates 5 being installed at two sides of the base 1 with left-right symmetry. The two lower connecting plates 4 are connected to each other by a first synchronous rod 8, and the two upper connecting plates 5 are connected to each other by a second synchronous rod 9. The zero gravity drive mechanism 10 is drive-connected to the first synchronous rod 8; in this embodiment, the zero gravity drive mechanism 10 is an electric angle adjuster that drives the lower connecting plates 4 to rotate. The design featuring two sets of lower connecting plates 4 and upper connecting plates 5 enables stable installation of the base 1 and the front end of the frame 2, and the zero gravity drive mechanism 10 realizes elevation angle adjustment of the frame 2.

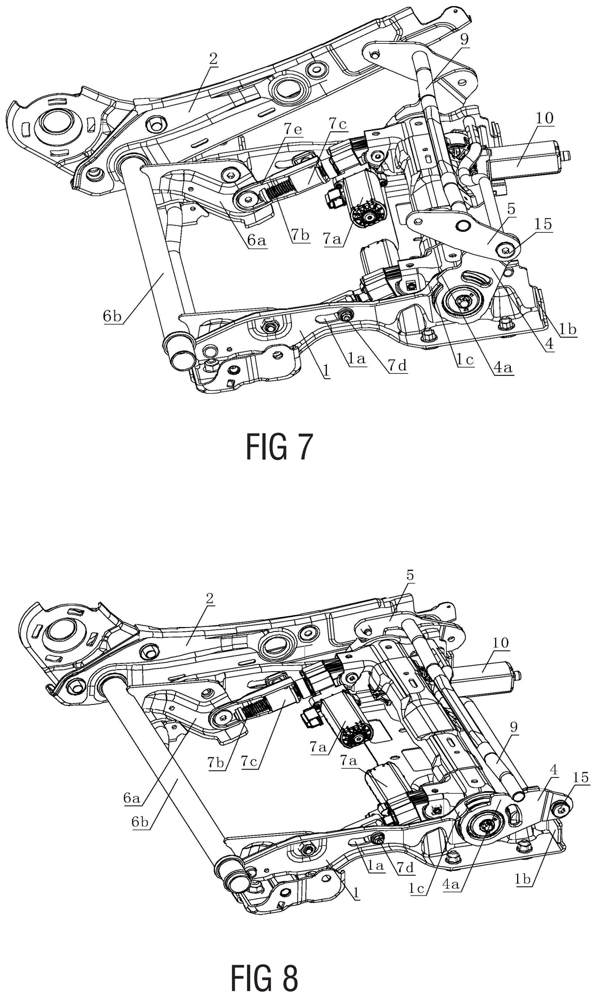

As shown in Fig. 8, first limiting parts 1b are folded upwards at two sides of the front end of the base 1. When the seat is in a folded state, the lower connecting plates 4 can abut the first limiting parts 1b, so as to ensure that the overall structure is more stable when the seat is in the folded state.

Further, as shown in Fig. 7, second limiting parts 1c extend outwards at two sides of the front end of the base 1, and limiting protrusions 4a are formed on a side face of the lower connecting plates 4 close to the frame 2. When the seat is in zero gravity mode, side parts of the limiting protrusions 4a can abut the second limiting parts 1c. With this design, rotation of the lower connecting plates 4 can be limited.

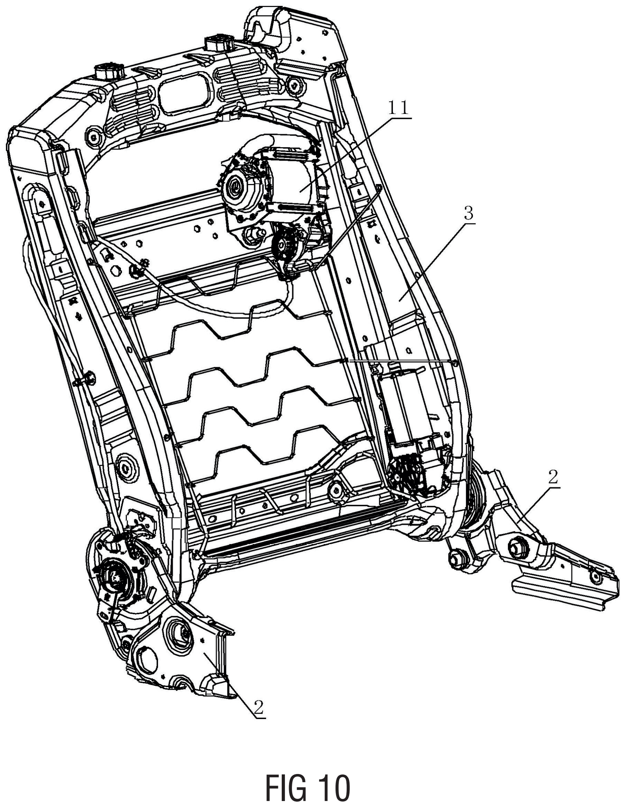

As shown in Fig. 10, the seat backrest 3 and the frame 2 are likewise connected to each other via an electric angle adjuster. This design enables rearward adjustment of the seat backrest 3 relative to the frame 2. A seatbelt retractor 11 is also installed at a shoulder position of the seat backrest 3. With this design, when the seat is in zero gravity mode, a seatbelt can restrain the passenger at all times, thus ensuring safety of travel for the passenger.

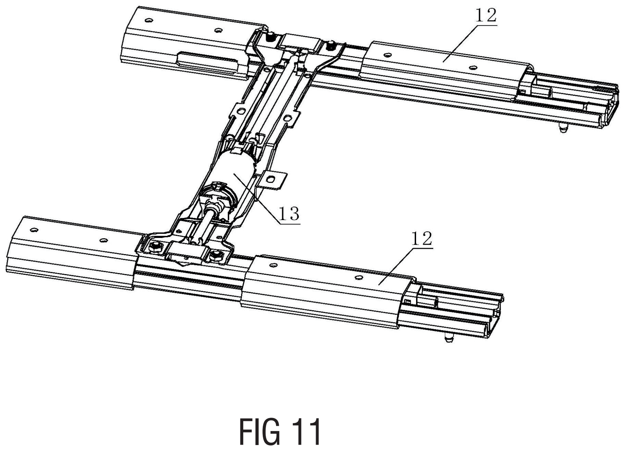

As shown in Figs 1 and 11, two slide rails 12 are also symmetrically installed by bolts at two sides at the bottom of the base 1. The bottom of each slide rail 12 is fixedly connected to the chassis of a motor vehicle, and the two slide rails 12 are drive-connected to each other by a slide rail electric motor 13, so as to realize front-rear adjustment of the seat. A leg support assembly 14 is fixedly installed by bolts at the bottom of the front end of the frame 2; in the folded state, the leg support assembly 14 can be vertically folded at the front end of the frame 2, whereas in zero gravity mode, the bottom of the leg support assembly 14 can turn forwards to extend, for the passenger to put their calves on.

Finally, it should be explained that the above description is merely of preferred embodiments of the present invention; enlightened by the present invention, those skilled in the art will be able to make various similar representations without going against the purpose and claims of the present invention, and all such changes fall within the scope of protection of the present invention.

### List of References

- 1: base
- 1a: supporting guide hole
- 1a1: accommodating hole
- 1b: first limiting part
- 1c: second limiting part
- 2: frame
- 3: seat backrest
- 4a: limiting protrusions
- 5: upper connecting plate
- 6: rotary component
- 6a: connecting plate
- 6a1: arc-shaped segment
- 6a2: supporting part
- 6a3: extension part
- 6b: rear cross-tube
- 7: height adjustment drive mechanism
- 7: height adjustment drive mechanism
- 7a: electric motor
- 7b: lead screw
- 7c: slider
- 7d: guide rod
- 7e: connecting support
- 8: first synchronous rod
- 9: second synchronous rod
- 10: zero gravity drive mechanism
- 11: seatbelt retractor
- 12: slide rail
- 13: electric motor
- 14: leg support assembly
- 15: pin

## Claims

1. Zero gravity seat with height-adjustable cushion, comprising a base (1), with a frame (2) being provided above the base (1), a seat backrest (3) being rotatably installed at a rear end of the frame (2), a lower connecting plate (4) being rotatably connected to a front end of the base (1), and an upper connecting plate (5) being rotatably connected to a front end of the frame (2), the lower connecting plate (4) and the upper connecting plate (5) being hinge-connected to each other, **characterized in that** a rotary component (6) is provided between a rear part of the base (1) and a rear part of the frame (2), the rotary component (6) having a first fulcrum rotatably connected to the rear end of the frame (2) and a second fulcrum rotatably connected to the base (1); a zero gravity drive mechanism (10) and a height adjustment drive mechanism (7) are installed on the base (1), the zero gravity drive mechanism (10) being configured to drive the lower connecting plate (4) to rotate relative to the base (1), and the height adjustment drive mechanism (7) being configured to drive the rotary component (6) to rotate about the second fulcrum relative to the base (1).

2. Zero gravity seat with height-adjustable cushion according to claim 1, **characterized in that** the rotary component (6) comprises a rear cross-tube (6b) and two rotary connecting plates (6a) fixed to two ends of the rear cross-tube (6b), two ends of the rear cross-tube (6b) being rotatably fitted into a rear part of the frame (2), and middle parts of the two rotary connecting plates (6a) being rotatably installed at two sides of the interior of the base (1) respectively; and two said height adjustment drive mechanisms (7) are provided, respectively configured to drive the two rotary connecting plates (6a) to rotate.

3. Zero gravity seat with height-adjustable cushion according to claim 2, **characterized in that** an arc-shaped segment (6a1) adapted to a profile of the rear cross-tube (6b), and a supporting part (6a2) extending rearwards from a lower end of the arc-shaped segment (6a1), are provided at a rear end of the rotary connecting plate (6a), the arc-shaped segment (6a1) and the supporting part (6a2) both being connected to the rear cross-tube (6b) by welding.

4. Zero gravity seat with height-adjustable cushion according to claim 2 or 3, **characterized in that** the height adjustment drive mechanism (7) comprises an electric motor (7a) and a lead screw (7b) driven to rotate by the electric motor (7a), a base of the electric motor (7a) being rotatably arranged in a middle position of the base (1), a slider (7c) being fitted by screw-thread to the lead screw (7b), and an end of the slider (7c) remote from the electric motor (7a) being rotatably connected to the rotary connecting plate (6a).

5. Zero gravity seat with height-adjustable cushion according to claim 4, **characterized in that** a side part of the base (1) is provided with a supporting guide hole (1a), and an outwardly protruding guide rod (7d) is provided on the slider (7c), the guide rod (7d) being slidably supported in the supporting guide hole (1a).

6. Zero gravity seat with height-adjustable cushion according to claim 5, **characterized in that** the supporting guide hole (1a) is an arc-shaped hole, and an upwardly recessed accommodating slot (1a1) is provided at an upper side of the arc-shaped hole.

7. Zero gravity seat with height-adjustable cushion according to claim 5 or 6, **characterized in that** a connecting support (7e) is provided on the slider (7c), the guide rod (7d) being arranged on the connecting support (7e), and an extension part (6a3) extending towards the electric motor (7a) is provided on the rotary connecting plate (6a), the connecting support (7e) being rotatably connected to the extension part (6a3), and installed at a front end of the second fulcrum.

8. Zero gravity seat with height-adjustable cushion according to any one of the preceding claims 1 to 7, **characterized in that** the lower connecting plate (4) and the upper connecting plate (5) are provided in two sets, the two sets of lower connecting plates (4) and upper connecting plates (5) being arranged at two sides of the base (1) with left-right symmetry; the two lower connecting plates (4) are connected to each other by a first synchronous rod (8), the two upper connecting plates (5) are connected to each other by a second synchronous rod (9), and the zero gravity drive mechanism (10) is an electric angle adjuster that drives the lower connecting plates (4) to rotate.

9. Zero gravity seat with height-adjustable cushion according to any one of the preceding claims 1 to 8, **characterized in that** first limiting parts (1b) are folded upwards at two sides of the front end of the base (1), and when the seat is in a folded state, the lower connecting plates (4) are able to abut the first limiting parts (1b);
second limiting parts (1c) extend outwards at two sides of the front end of the base (1), limiting protrusions (4a) are provided on a side face of the lower connecting plates (4) close to the frame (2), and when the seat is in zero gravity mode, side parts of the limiting protrusions (4a) abut the second limiting parts (1c).

10. Zero gravity seat with height-adjustable cushion according to any one of the preceding claims 1 to 9, **characterized in that** a seatbelt retractor (11) is provided at a shoulder position of the seat backrest (3).
